# Europäisches Patentamt

## European Patent Office

## Office européen des brevets

(11) Veröffentlichungsnummer: **0 030 283**
**B1**

(12) **EUROPÄISCHE PATENTSCHRIFT**

(45) Veröffentlichungstag der Patentschrift:
27.07.83

(21) Anmeldenummer: 80107041.8

(22) Anmeldetag: 14.11.80

(51) Int. Cl.³: **F 16 K 31/08**

(54) Betätigungseinrichtung für ein Wegeventil.

(30) Priorität: 07.12.79 DE 2949250

(43) Veröffentlichungstag der Anmeldung:
17.06.81 Patentblatt 81/24

(45) Bekanntmachung des Hinweises auf die Patenterteilung:
27.07.83 Patentblatt 83/30

(84) Benannte Vertragsstaaten:
AT BE CH DE FR GB IT LI NL

㊱ Entgegenhaltungen·
DE-A-2 917 232
DE-B-1 024 303
DE-B-1 195 121
US-A-3 951 378
ENERGIE FLUIDE, Nr. 95, Mai 1977, »Détecteur de
position pneumatique«, Seiten 33, 34

(73) Patentinhaber: WABCO Steuerungstechnik GmbH & Co.,
Bartweg 13 Postfach 91 12 70, D-3000 Hannover 91 (DE)

(72) Erfinder: Ortmann, Walter, Im Heckenweg 3,
D-3000 Hannover 21 (DE)
Erfinder: Göttling, Helmut, Fuhrenkamp 3,
D-3004 Isernhagen 4 (Gartenstadt Lohne) (DE)

(74) Vertreter: Schrödter, Manfred, WABCO Westinghouse
Fahrzeugbremsen GmbH Am Lindener
Hafen 21 Postfach 91 12 80, D-3000 Hannover 91 (DE)

## Betätigungseinrichtung für ein Wegeventil

Die Erfindung betrifft eine Betätigungseinrichtung für ein Wegeventil, gemäß dem Oberbegriff des Patentanspruchs 1.

Es ist bekannt, Wegeventile rein mechanisch mittels eines Stößels oder elektromagnetisch über eine den Anker des Wegeventils umschließende Magnetspule oder auch mittels eines Dauermagneten, welcher bei Annäherung an den Anker des Wegeventils bewegt wird, zu schalten.

Die letztgenannte Möglichkeit wird z. B. in abgewandelter Form in einem Prospekt der Firma FESTO (FESTO-Ventile 4/76, Katalogblatt 2.935) gezeigt.

Dort ist auf dem Mantel eines Arbeitszylinders ein als Näherungsschalter bezeichnetes Wegeventil befestigt, welches einen Druckmitteleingang P, einen Druckmittelausgang A und eine Schaltzunge aufweist, die vor dem Druckmittelausgang angeordnet ist und die Funktion eines Verschlußkörpers hat. Auf dem im Arbeitszylinder angeordneten Arbeitskolben ist ein Dauermagnet vorgesehen. Fährt der mit dem Dauermagneten versehene Arbeitskolben an der Schaltzunge vorbei, so wird diese für den Zeitraum des Vorbeifahrens des Arbeitskolbens angezogen und gibt den Druckmittelausgang frei, so daß ein Druckmittelimpuls von einer Druckmittelquelle zu einem Druckmittelverbrauch gelangen kann.

Diese bekannte Einrichtung läßt sich überall dort einsetzen, wo ein kurzer Impuls entweder zum Ansteuern eines Gerätes in einer Richtung oder zu Anzeigezwecken benötigt wird.

In vielen Fällen ist es jedoch notwendig, längere Steuersignale zu erzeugen und zu diesem Zweck das Ventil auch dann noch in der Offenstellung halten zu müssen, wenn der mit dem Dauermagneten versehene Arbeitskolben die Ventileinrichtung schon passiert hat.

Bei der bekannten Betätigungseinrichtung ist dies nicht möglich, da die Schaltzunge den Druckmittelausgang nur für den Zeitraum freigibt, in welchem sich der Arbeitskolben in unmittelbarer Nähe der Schaltzunge befindet.

Durch die US-A-3 951 378 ist eine Betätigungseinrichtung der eingangs genannten Art bekannt, welche die vorstehend erwähnten Nachteile nicht aufweist. Bei dieser bekannten Einrichtung ist es möglich, ein Wegeventil in wenigstens zwei unterschiedliche konstante Schaltstellungen zu bringen und in diesen Schaltstellungen zu halten.

Dies wird dadurch erreicht, daß ein als Doppelventilkörper ausgebildeter Anker mittels einer Druckfeder auf dem Einlaßventilsitz gehalten und mittels der Kraft einer ersten Magnetspule vom Einlaßventilsitz abhebbar und gegen den Auslaßventilsitz bewegbar ist. Gleichzeitig wird an eine im Magnetkreis vorgesehene, einen Magnetkern umgebende zweite Magnetspule eine Spannung angelegt, um den Magnetfluß über das den Anker umgebende Ankerrohr und den Anker umzuleiten. In dieser Stellung (Auslaßventil geschlossen) wird der als Doppelventilkörper ausgebildete Anker von einem Dauermagneten gehalten. Die den Magnetkreis bildenden Teile des Mehrwegeventils sind so ausgebildet, daß sie zwecks Unterbrechung des Magnetkreises und der damit verbundenen Rückstellung des Doppelventilkörpers in seine Ausgangsstellung (Eingangsventil geschlossen) relativ zueinander verschiebbar sind. Durch die Verwendung von zwei Magnetspulen ist diese Einrichtung jedoch aufwendig und störanfällig.

Der Erfindung liegt die Aufgabe zugrunde, eine Betätigungseinrichtung der eingangs genannten Art zu schaffen, die es ermöglicht, ein Wegeventil in wenigstens zwei unterschiedliche konstante Schaltstellungen zu bringen und die einfach im Aufbau sowie unabhängig von einer Spannungsquelle ist.

Diese Aufgabe wird mit den kennzeichnenden Merkmalen gemäß Patentanspruch 1 gelöst.

Ein besonderer Vorteil ist bei der erfindungsgemäßen Betätigungseinrichtung darin zu sehen, daß die konstanten Schaltstellungen des Wegeventils in Abhängigkeit von der Bewegungsrichtung eines Arbeitskolbens bringbar sind.

Vorteilhafte Ausgestaltungen und Weiterbildungen der Erfindung sind in den Unteransprüchen aufgezeigt.

Die Erfindung wird nachstehend an Hand eines Ausführungsbeispiels näher erläutert.

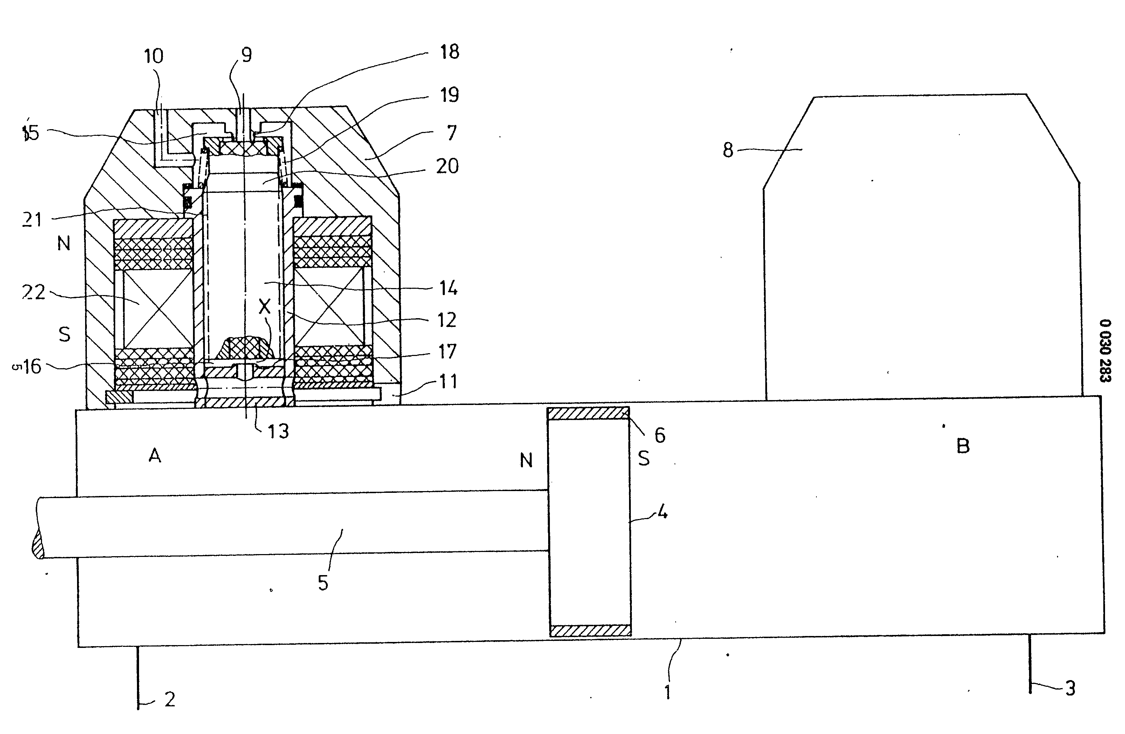

Die Abbildung zeigt einen Arbeitszylinder, auf welchem zwei 3/2-Wegeventile angeordnet sind, die mittels der erfindungsgemäßen Betätigungseinrichtung berührungslos geschaltet werden.

Auf einem doppeltwirkenden Arbeitszylinder 1 mit zwei Be- und Entlüftungsleitungen 2, 3 und einem Arbeitskolben 4, welcher einen Dauermagneten 6 und eine Kolbenstange 5 aufweist, sind zwei 3/2-Wegeventile 7 und 8 befestigt. Die beiden Wegeventile 7 und 8 sind identisch ausgebildet. Aus diesem Grunde ist lediglich das 3/2-Wegeventil 7 im Schnitt dargestellt.

In einem Ventil 7 mit einem Druckmitteleingang 9 und zwei Druckmittelausgängen 10 und 11 ist ein Ankerrohr 12 fest angeordnet.

Im Endbereich des Ankerrohres 12 ist ein den Druckmittelausgang 11 beinhaltender Verschluß 13 angeordnet. Ein als Verschlußkörper dienender Anker 14 wird in dem Ankerrohr 12 gleitend geführt und trennt eine im Ventil 7 vorgesehene ringförmige Einlaßkammer 15 von einer durch den Anker 14 und den Verschluß 13 gebildeten Auslaßkammer 16. Der Druckmittelausgang 11 weist auslaßkammerseitig eine als Ventilsitz 17 dienende Ringwulst auf.

Desgleichen besitzt der Druckmitteleingang 9 einlaßkammerseitig eine als Ventilsitz 18 ausgebildete Ringwulst.

Eine sich einerseits am Ende des Ankerrohres 12 und andererseits auf einem Absatz des Ankers 14 abstützende Druckfeder 19 hält den Anker 14 in einer Endlage, in diesem Ausführungsbeispiel auf den Sitz des Druckmitteleinganges 9. Der Druckmitteleingang 9 ist an eine nicht dargestellte Druckmittelquelle angeschlossen. Der Druckmittelausgang 10 ist mit einem, in diesem Ausführungsbeispiel nicht gezeigten Verbrauch verbunden, und der Druckmittelausgang 11 führt zur Atmosphäre. In den Anker 14 sind in axialer Richtung zwei Nute 20, 21 eingearbeitet, über welche die Einlaßkammer 15 mit der Auslaßkammer 16 verbindbar ist. Auf dem Ankerrohr 12 ist ein ringförmiger Dauermagnet 22 fest angeordnet. Die Funktion dieser Betätigungseinrichtung wird nachstehend näher erläutert.

In der Darstellung wird der Anker 14 von der Druckfeder 19 auf seinem Ventilsitz 18 gehalten, so daß der Druckmitteleingang 9 gegen den zum Verbraucher führenden Druckmittelausgang 10 abgesperrt ist. Es wird einmal angenommen, daß der Arbeitskolben 4 über die Druckmittelleitung 3 und die Kammer B des Arbeitszylinders 1 mit Druckmittel beaufschlagt und in Richtung auf die Kammer A zu verschoben wird.

Wenn sich der Arbeitskolben 4 am 3/2-Wegeventil 7 vorbeibewegt, wird der Anker 14 vom Südpol S des auf den Arbeitskolben 4 befindlichen Dauermagneten 6 angezogen. Bei diesem Vorgang wird der Luftspalt X zwischen dem unteren Ende des Ankers 14 und dem als Polschuh dienenden Verschluß 13 verringert, so daß die Anziehungskraft, die vom ersten Dauermagneten 22 auf den Anker 14 ausgeübt wird, größer wird.

In der Schließstellung des Auslaßventils — Anker 14, Ventilsitz 17 — ist die erwähnte Anziehungskraft so groß, daß der Anker 14 auch nach Vorbeifahren des zweiten Dauermagneten 6 und Unwirksamwerden des Kraftfeldes des zweiten Dauermagneten 6 in dieser Stellung gehalten wird.

Wird über die Druckmittelleitung 2 und die Kammer A der Arbeitskolben 4 mit Druckmittel beaufschlagt und in Richtung auf die Kammer B zu verschoben, so bleibt der Anker 14 des 3/2-Wegeventils noch solange in seiner eingenommenen Position, bis der Nordpol N des auf dem Arbeitskolben 4 befindlichen Dauermagneten 6 in den Kraftfeldbereich des ersten Dauermagneten 22 gelangt und das Kraftfeld des ersten Dauermagneten 22 stört.

In diesem Moment übersteigt die Kraft der Druckfeder 19 die Kraft des ersten Dauermagneten 22, so daß der Anker 14 in seine ursprüngliche Stellung, Einlaßventil — Anker 14, Ventilsitz 18 — geschlossen, gelangt.

Bei der weiteren Bewegung des Arbeitskolbens 4 in Richtung auf die Kammer B zu, wird das zweite 3/2-Wegeventil 8 während des Vorbeifahrens des Arbeitskolbens 4 in der gleichen Art und Weise geschaltet.

Die beschriebene Betätigung des 3/2-Wegeventils 7 vollzieht sich gewissermaßen nach Art eines Kippvorganges, da die von der gesamten magnetischen Anordnung (erster Dauermagnet 22 statisch, zweiter Dauermagnet 6 dynamisch) ausgeübte Kraft ca. nach dem halben Hub des Ankers 14 die Kraft der Druckfeder 19 überschreitet und den Anker 14 beschleunigt in eine zweite Schaltstellung bringt.

Während des Rückstellvorganges des Ankers 14 von der zweiten Schaltstellung in die erste Schaltstellung wird der Kippvorgang durch Schwächung bzw. Störung des Kraftfeldes des ersten Dauermagneten 22 durch das entgegengerichtete Kraftfeld des zweiten Dauermagneten 6 bewirkt.

## Patentansprüche

1. Betätigungseinrichtung für ein zwei Schaltstellungen aufweisendes Wegeventil mit den folgenden Merkmalen:

a) es ist wenigstens ein Ventilsitz (18, 1') und ein Verschlußkörper vorgesehen;

b) zur Bewegung des Ventilsitzes (18, 1') oder des Verschlußkörpers ist ein vor einer Druckfeder (19) in seine erste Schaltstellung belasteter Anker (14) vorgesehen;

c) ein erster Dauermagnet (22) übt auf den Anker (14) eine der Druckfeder (19 entgegengesetzt gerichtete Kraft aus, de in der ersten Schaltstellung des Ankers 14) aber so gering ist, daß der Anker (14) mittels der Kraft der Druckfeder (19) in seiner ersten Schaltstellung gehalten wird;

d) es ist ein zweiter Magnet (6) vogesehen, der das Magnetfeld des ersten Dauermagneten (22) so verstärken kann, daß der Anker (14) gegen die Federkraft ('9) in seine zweite Schaltstellung bringbar st und so schwächen kann, daß der Anker (14) mittels der Federkraft (19) in seine erste Schaltstellung bringbar ist;

e) der Anker (14) und der erste Dauermagnet (22) sind so angeordnet, daß der Anker (14) in seiner zweiten Schaltstellung gegen die Kraft der Feder (19) von der vom ersten Dauermagneten (22) ausgeübten Kraft haltbar ist,

gekennzeichnet durch das folgende Merkmal:

f) der zweite Magnet (6) ist als Dauermagnet ausgebildet, der bezüglich des Ankers (14) und des ersten Dauermagneten (22) quer zur Bewegungsrichtung des Ankers (4) verschiebbar angeordnet ist.

2. Betätigungseinrichtung nach Anspruch 1 für ein zur Ansteuerung eines Zylinders vorgesehenes Wegeventil, gekennzeichnet durch die folgenden Merkmale:

a) das Wegeventil (7) ist auf einem Zylinder (1) fest angeordnet;

b) der zweite Dauermagnet (6) ist auf dem Arbeitskolben (4) des Zylinders (1) befestigt.

3. Betätigungseinrichtung nach Anspruch 2, dadurch gekennzeichnet, daß der zweite Dauermagnet (6) auf einem mit dem Arbeitskolben (4) des Zylinders (1) verbundenen Teil angeordnet ist.

## Claims

1. Actuating device for a distribution valve, which has two switching positions, having the following features:

a) at least one valve seat (18, 17) and one sealing member are provided;

b) in order to move the valve seat (18, 17) or the sealing member, an armature (14) loaded in its first switching position by a compression spring (19) is provided;

c) a first permanent magnet (22) exerts on the armature (14) a force opposing the compression spring (19), which force is, however, so small when the armature (14) is in the first switching position that the armature (14) is held in its first switching position by the force of the compression spring (19);

d) a second magnet (6) is provided which can intensify the magnetic field of the first permanent magnet (22) to such an extent that the armature (14) can be brought into its second switching position against the force of the spring (19), and which can weaken this field to such an extent that the armature (14) can be brought into its first switching position by means of the force of the spring (19);

e) the armature (14) and the first permanent magnet (22) are arranged in such a manner that the armature (14) can be held in its second switching position by the force exerted by the first permanent magnet (22) against the force of the spring (19);

characterised by the following feature:

f) the second magnet (6) is constructed as a permanent magnet which, in respect of the armature (14) an the first permanent magnet (22), is located so that it is displaceable transversely with respect to the direction of movement of the armature (14).

2. Actuating device according to claim 1 for a distribution valve provided for driving a cylinder, characterised by the following features:

a) the distribution valve (7) is firmly attached to a cylinder (1);

b) the second permanent magnet (6) is attached to the working piston (4) of the cylinder (1).

3. Actuating device according to claim 2, characterised in that the second permanent magnet (6) is located on a part connected to the working piston (4) of the cylinder (1).

## Revendications

1. Dispositif de commande pour un robinet distributeur présentant deux positions de commutation, avec les caractéristiques suivantes:

a) il est prévu au moins un siège de soupape (18, 17) et un obturateur;

b) pour déplacer le siège de soupape (18, 17) ou l'obturateur il est prévu un induit (14) chargé, dans sa première position de commutation, par un ressort de compression (19);

c) un premier aimant permanent (22) exerce sur l'induit (14) une force dirigée en sens opposé à celle du ressort de compression (19) mais qui, dans la première position de commutation de l'induit (14) est suffisamment faible pour que l'induit (14) soit maintenu dans sa première position de commutation par la force du ressort de compression (19);

d) il est prévu un deuxième aimant (6) qui peut renforcer le champ magnétique du premier aimant permanent (22) de façon telle que l'induit (14) puisse venir dans sa deuxième position de commutation en agissant contre la force du ressort (19) et peut l'affaiblir de façon telle que l'induit (14) puisse venir dans sa premièr position de commutation à l'aide du ressort de compression (19);

e) l'induit (14) et le premier aimant permanent (22) sont disposés de façon telle que l'induit (14) puisse être maintenu dans sa deuxième position de commutation sous l'action de la force exercée par le premier aimant permanent (22) et en agissant contre la force du ressort (19), caractérisé par la caractéristique suivante:

f) le deuxième aimant (6) est conçu sous forme d'aimant permanent disposé, par rapport à l'induit (14) et au premier aimant permanent (22), perpendiculairement à la direction du déplacement de l'induit (4).

2. Dispositif de commande selon la revendication 1, pour robinet distributeur prévu pour commander un vérin, caractérisé par les caractéristiques suivantes:

a) le robinet distributeur (7) est disposé solidairement sur un vérin (1);

b) le deuxième aimant permanent (6) est fixé sur le piston (4) du vérin (1).

3. Dispositif de commande selon la revendication 2, caractérisé en ce que le deuxième aimant permanent (6) est disposé sur une pièce liée au piston (4) du vérin (1).